(19) Europäisches Patentamt
European Patent Office
Office européen des brevets

(11) **EP 4 224 366 A1**

(12) **EUROPEAN PATENT APPLICATION**

(43) Date of publication:
**09.08.2023 Bulletin 2023/32**

(21) Application number: **22154927.2**

(22) Date of filing: **03.02.2022**

(51) International Patent Classification (IPC):
***G06K 9/62*** *(2022.01)*

(52) Cooperative Patent Classification (CPC):
**G06F 18/24133; G06F 18/214**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Almotive Kft.
1025 Budapest (HU)**

(72) Inventors:
• **KOZMA, Dániel Ákos
1142 Budapest (HU)**
• **MATUSZKA, Tamás
1063 Budapest (HU)**
• **UTASI, Ákos
2131 Göd (HU)**

(74) Representative: **Hofmann, Matthias
Boehmert & Boehmert
Anwaltspartnerschaft mbB
Pettenkoferstraße 22
80336 München (DE)**

(54) **NEURAL NETWORK TRAINING METHOD USING SEMI-PSEUDO-LABELS**

(57) The present invention provides a method for training a complex machine learning model based on a dataset that comprises datapoints and ground truth labels for at least some of the datapoints of the dataset, wherein the datapoints comprise images, the method comprising:

- using a reduced-complexity machine learning model to predict pseudo labels for the dataset, and
- training the complex machine learning model using an extended dataset that comprises the ground truth labels and the pseudo labels as output.

Fig. 2

**Description**

TECHNICAL FIELD

The present invention relates to a method for training a complex machine learning model based on a dataset that comprises datapoints and ground truth labels for at least some of the datapoints of the dataset.

The present invention also relates to a computer-readable storage medium storing program code, the program code comprising instructions for carrying out such a method.

BACKGROUND

Object detection is a crucial part of an autonomous driving system since increasingly complex layers are built on the top of the perception system which itself relies on fast and accurate obstacle detections. Object detection is typically performed by convolutional neural networks which are trained by means of supervised learning. Supervised learning is a method where a model is fed with input data and its main objective is to learn a function that maps the input data to the corresponding output. Since convolutional neural networks, the best models for visual domain, are heavily over-parameterized, a large amount of annotated data is needed for learning the mapping function. Therefore, a substantial amount of manual effort is required to annotate data with sufficient quality and quantity, which is an expensive and error-prone method. In addition, obtaining precise ground truth data is sometimes impossible due to human or sensor constraints. For example, the detection range of LiDARs limits the annotation of distant objects which presence must be known by an autonomous driving system due to fast position and location change on a highway. Radars could overcome this kind of limitation, but they have a more reduced field of view and only a subset of the interesting object categories are detectable with it. A human limitation is, for example, the inability to accurately estimate the spatial position of objects in 3D from 2D images without any 3D clue e.g. point clouds collected by a LiDAR or radar detections. Consequently, a novel solution is needed for extending current training methods to overcome this limitation and enable accurate 3D object detection for real-time applications.

Several approaches have been developed to facilitate neural network training. One of the most popular solutions is transfer learning where a neural network is trained on a particular dataset, such as ImageNet and then fine-tuned on another dataset (e.g., a model trained to recognize cars can be trained to classify trucks using transfer learning). Self-supervised learning which utilizes unlabeled data to train a model performing proxy tasks and then fine-tunes it on a downstream task in a supervised manner has resulted in breakthroughs in language modeling. Pseudo-labeling is a simple solution that uses the same model's predictions as true labels during the training. However, none of these solutions helps the model to produce predictions that are not part of the training distribution.

SUMMARY OF THE INVENTION

The objective of the present invention is to provide a method and an apparatus for training a complex machine learning model, which overcomes one or more of the above-mentioned problems of the prior art.

A first aspect of the invention provides a method for training a complex machine learning model based on a dataset that comprises datapoints and ground truth labels for at least some of the datapoints of the dataset, wherein the datapoints comprise images, the method comprising:

- using a reduced-complexity machine learning model to predict pseudo labels for the dataset, and
- training the complex machine learning model using an extended dataset that comprises the ground truth labels and the pseudo labels as output.

The method of the first aspect has the advantage that based on an initial dataset, which may be "incomplete" in the sense that objects are visible in the images, but are not labelled, or not fully labelled, an extended dataset can be automatically created and the extended dataset is then used for training the (complex) machine learning model. In this way, optimal machine learning can be performed even in cases where insufficient training data are available.

Pseudo labels may be "pseudo" in the sense that they are estimated by the reduced-complexity machine learning model and not part of the ground truth dataset. Experiments have shown that these pseudo labels may be helpful for improving the accuracy of a machine learning model, even if it turns out some of the pseudo labels might be not correct in comparison to a human labelling.

The datapoints may be input datapoints in the sense that they are being provided as input for the training, whereas the labels comprise the output.

The datapoints comprise images. For example, the machine learning models may be trained to detect objects in the images. In that way, each of the datapoints may comprise zero, one or more objects. For example, the images may be images of a surrounding of a car, and the objects maybe objects relevant for navigating a car, such as vehicles, two-wheelers, pedestrians, traffic signs, and traffic lights.

In a first implementation of the method according to the first aspect, a ground truth label comprises a coordinate, a dimension, and/or an orientation of a 3D bounding box, a pseudo label comprises a coordinate, a dimension and/or an orientation of a 2D bounding box, and/or a ground truth label and/or a pseudo label comprises an objectness score and/or probabilities for a set of object categories.

Herein, orientation of a 2D bounding box may refer to an angular orientation, e.g. an angle of the 2D bounding box relative to a horizontal line.

This implementation has the advantage that bounding boxes for objects can be predicted.

It is understood that the 3D bounding box may correspond to a cuboid, whereas the 2D bounding box may be a rectangle. The objectness score may be a score that indicates how likely it is that what can be seen in the above-mentioned bounding box is an object.

In a further implementation, the ground truth labels are labels of objects within an annotated area of the dataset and wherein the dataset comprises unlabelled datapoints for objects that are outside the annotated area of the dataset, wherein preferably the annotated area is a near-field and a non-annotated area is a far-field of a camera.

This implementation can be used in particular in the context of acquiring a training dataset for autonomous driving based on a sensor that has a limited range. For example, the sensor may comprise one or more LiDAR sensors, which can identify objects only within a certain near-field of the one or more LiDAR sensors. In such cases, objects within a required operational range may be visible in images acquired using a camera, but labels can be obtained using the LiDAR data only for objects that are within a range of the one or more LiDAR sensors.

In a further implementation the method further comprises:

- obtaining 3D data, and
- extending the dataset with virtual images based on a virtual camera virtually capturing the 3D data,

wherein the obtaining the images comprises moving a position of the virtual camera to obtain shifted and/or zoomed images from a moved camera position.

This implementation has the advantage that virtual images that are virtually captured using the virtual camera can be used to extend the original dataset.

It is understood that some of the images of the dataset may have been acquired with an actual camera, whereas other images may have been acquired virtually using the virtual camera. In other words, it can be that the dataset comprises only virtual images that have been obtained from the 3D data.

Preferably, the 3D data has been obtained using LiDAR and/or using other 3D imaging systems.

Preferably, the 3D data are part of the dataset. The 3D data may comprise labels. As outlined above, the annotation maybe incomplete and some objects in the 3D data may be unlabelled. As the virtual camera is moved, unlabelled objects may move in to the virtual field of view of the virtual camera. Thus, the pseudo-labelling of such unlabelled objects maybe of particular relevance in the context of the

In a further implementation, the obtaining images from the moved camera position comprises adjusting a camera matrix that describes a mapping of positions in the 3D data to a 2D image,

Preferably, adjusting the camera matrix comprises adjusting the principal point and the focal length based on an original camera matrix and a 2D scaling. It is understood that zooming in with a camera affects the camera matrix in a complex manner. Thus, the virtual image acquisition needs to reflect these changes, so that the virtual images that have been obtained based on a virtual shifting of the camera position are valid training points, i.e., they correctly reflect how actual images would look like if they had been acquired using a camera with such a principal point and focal length.

In a further implementation, the method comprises a step of performing deduplication to remove pseudo labels for which the dataset already comprises ground truth labels.

This has the advantage that it can be made sure that, where ground truth labels are available, training is only performed on the ground truth labels and not on the pseudo labels, which might be of lower quality.

In a further implementation, the method further comprises an initial step of detecting, based on the images, objects for which pseudo labels need to be predicted.

In this implementation, there is no need for manual annotations, an off-the-shelf 2D object detector can be used for this purpose, for example an FCOS detector, Fully Convolutional One-Stage Object Detection, can be used. In a preferred embodiment, the simple reduced-complexity machine learning model is also being used for detecting the objects.

Optionally, a simple algorithm can be used for detecting the presence of an object and the reduced-complexity machine learning model is used for determining the label of the object.

In a preferred embodiment, the step of performing deduplication comprises:

- determining a ratio of an intersection over union of a 2D bounding box of a pseudo label and a 2D projection of a 3D bounding box of a ground truth label, and
- if the ratio is larger than a predetermined threshold, removing the pseudo label from the extended dataset.

This implementation is applicable for example to a scenario where the reduced-complexity machine learning model predicts a label that comprises a 2D bounding box based on one or more 2D images, for example stereo images. This object detection in the 2D images may detect objects that are already labelled in the ground truth dataset. However, in this case it is expected that the 2D bounding box of the pseudo label has a high overlap with the 2D projection of the 3D bounding box of the ground truth label that corresponds to the same object. Therefore, this embodiment can efficiently and with high accuracy eliminate duplicate labels.

In a further implementation, the training of the complex machine learning model comprises using a loss function that disables loss terms depending on available 3D properties for the given ground truth data. Preferably, a Boolean flag is used to indicate in the extended dataset whether a label is a ground truth label or a predicted pseudo label.

This has the advantage that the training is not distorted by datapoints, where actually no ground truth information on the 3D position is available.

In a further implementation, the method further comprises using the complex machine learning model for object detection in autonomous driving.

Experiments have shown that the method of the first aspect is particularly useful in the context of autonomous driving.

Preferably, the labels comprise object classes that preferably comprise one or more of vehicles, two-wheelers, pedestrians, traffic signs, and traffic lights.

In a further implementation, the complex machine learning model is used to predict a center point of a 3D cuboid based on a prediction of the 2D projection of the 3D cuboid and a predicted depth.

In a further implementation, the depth is predicted based on a disparity that is calculated based on a camera baseline, a focal length and a depth. Experiments have shown that this results in a smoother loss landscape which speeded up convergence.

Optionally, a predicted depth can be adjusted based on a focal length of an actual camera, e.g. a camera that is used for acquiring the images in which objects should be detected.

A different camera setup than which was used for the training dataset will not cause problems. Due to the usage of 3D zooming the process is invariant to camera setups with different focal lengths. The reason for this is that during the training we change the focal length of the cameras in order to perform the zoom augmentation. As a positive side effect, this makes the method insensitive to cameras with different focal lengths since the network learns to handle it.

If we would not use 3D zoom augmentation, then the predicted depth for a different camera setup still would not be wrong due to the formalization of depth target using the formula with disparity and focal length. However, 3D zoom helps to solve the problem.

In other embodiments, an adjustment can be based on a difference of the focal length of the camera that is used when applying the trained model and a focal length of a camera that is used for building the training dataset.

In a further implementation, the method further comprises a deduplication step of deduplicat-ing double annotations.

In a further implementation, the complex machine learning model is a multi-task machine learning model that is configured to solve a first task and a second task in parallel, and wherein the reduced-complexity machine learning model is configured to solve the first task.

This has the advantage that the complex machine learning model can be trained even with labels that are available only the first task, but this training of the first task leads to an improvement also for the (e.g. more difficult) second task.

Preferably, the first task comprises a prediction of a 2D bounding box and the second task comprises a prediction of a 3D bounding box.

In this way, the complex machine learning model can learn to make accurate predictions in 3D based on training data with labels in 2D as well as training data with labels in 3D.

In a further implementation of the method of the second aspect, training of the complex machine learning model, in particular based on multi-view images such as stereo images, comprises using a loss term that comprises one or more of:

- a projection loss term that is based on a 3D projection of 3D cuboid,
- a disparity loss term that is based on a disparity between a centre point of a 2D projected 3D bounding box on left and right stereo images, and
- a width loss term that is based on a difference between a width of a 2D projection of 3D bounding boxes on left and right stereo images.

Experiments have shown that these loss terms are particularly useful for obtaining accurate predictions.

A further aspect of the invention refers to a computer-readable storage medium storing program code, the program code comprising instructions that when executed by a processor carry out the method of the second aspect or one of the implementations of the second aspect.

BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.

FIG. 1    is a schematic diagram of effects of zoom augmentation on image and model space data, and

FIG. 2    is a flow chart of a method in accordance with the present invention.

DETAILED DESCRIPTION OF EMBODIMENTS

Improving machine learning methods by building extended datasets has been discussed in the prior art. For example, the concept of pseudo-labeling has been introduced in [1] as a simple and efficient self-supervised method for deep neural networks. The main idea of pseudo-labeling is to consider the predictions of a trained model as ground truth. Unlabeled data, which is typically easy to obtain, can be annotated using the trained model's prediction. Then, the same model is retrained on the labeled and pseudo-labeled data simultaneously. Our proposed solution is based on this concept but there is a fundamental difference between the solutions. Pseudo-labeling generates labels for the same task using the same model while our semi-pseudo-labeling method utilizes pseudo-labels generated by a different model for a more complex task. In [2], the authors generated pseudo-labels for object detection on dynamic vision sensor using a convolutional neural network trained on an active pixel sensor. The main difference compared to our solution is that pseudo-labels are used for the same task, namely 2D car detection on different sensor modalities. An NVIDIA patent [3] also uses pseudo-labels for training object detection neural networks. However, the invention described in the patent uses regular pseudo-labeling for training a neural network to perform the same task, namely, 2D object detection as opposed to our solution where the tasks are not the same. In addition, the solution requires the use of region proposal networks which indicates a two-stage network architecture that might not fulfill real-time criterion while our 3D object detection network uses a single stage architecture that utilizes semi-pseudo-labeling during training. IBM used pseudo-labeling in [4] for generating and augmenting their data labeling method. Their proposed solution has created pseudo-labels for unlabeled data while our method enables us to use annotated data *created* for a simpler task as pseudo-labels and does not exclusively rely on unlabeled data.

Transfer learning [5], [6] is the process when a model is trained for performing a specific task and its knowledge is utilized to solve another (related) problem. Transfer learning involves pretraining (typically on a large-scale dataset) a model and then customizing this model to a given task by either using the trained weights or fine-tuning the model by adding an additional classifier on the top of frozen weights. Transfer learning can be effectively used to transfer knowledge between related problems (e.g., the knowledge of a classifier trained to recognize cats is easy to transfer to a model that classifies dogs) which has similarities with our proposed method which can be considered as an extended version of transfer learning. However, we utilize semi-pseudo-labels to perform a more complex task (3D object detection with 2D pseudo labels) which might not be solvable using regular transfer learning. In addition, our solution enables simultaneous learning of different tasks as opposed to transfer learning.

Data augmentation [7] is a standard technique for enhancing training data and preventing overfitting using geometric transformations, color space augmentations, random erasing, mixing images, etc. Most data augmentation techniques operate in 2D [18], but recent work started to extend their domain to 3D [8], [18]. To the best of our knowledge, none of these solutions introduced zoom augmentation in 3D using a virtual camera, as our invention proposes. The closest solution which tries to solve the limited perception range is described in [19]. The method in the paper proposes to break down the entire image into multiple image patches, each containing at least one entire car and with limited depth variation. During inference, a pyramid-like tiling of images is generated for inference which increases the running time. In addition, the investigated range did not exceed 50 meters.

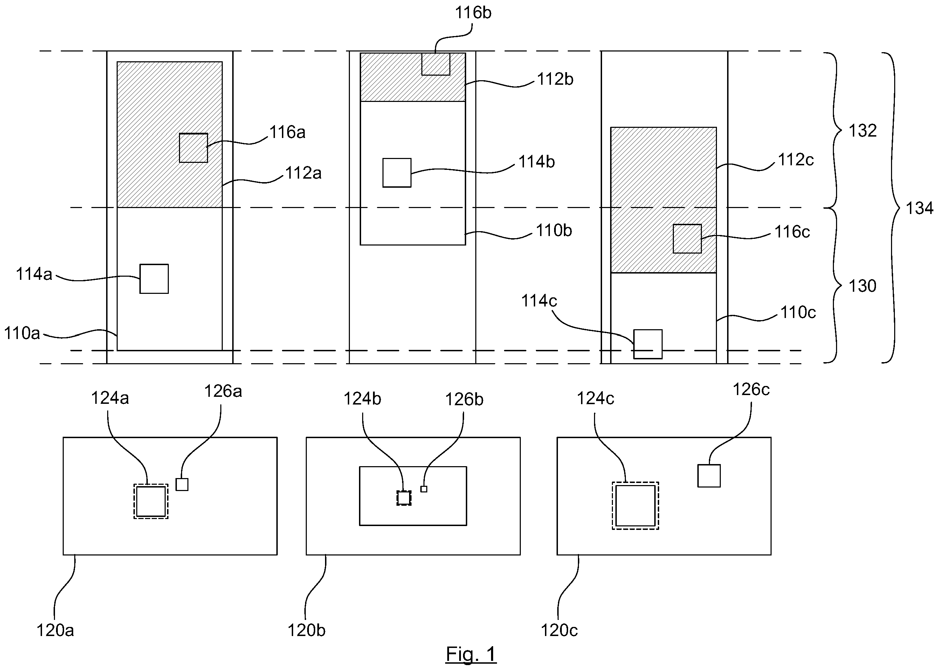

As is illustrated in FIG. 1, vanilla zoom augmentation methods have a number of issues. Specifically, FIG. 1 illustrates objects in a model space 100.

On the left, the situation is shown, where a first object 114a is in a first region 110a that falls within a full coverage range 130 of the dataset. The full coverage range 130 may correspond to a near field 130 of a camera.

Since the object 114a is in the full coverage, a label of the object 114a is known as ground truth. A second object 116a is within a second region 132 that is outside the range of the labelled dataset, but still within a required operational range 134. This situation leads to an original image 120a, where 2D representations 124a, 126a are visible.

In the middle of FIG. 1, the situation is shown where the original image 120a has been down-scaled to obtain the downscale image 120b with downscaled 2D representations 124b, 126b of the objects. In this situation, the annotated region 110b has moved outside the original dataset limit 130.

On the right side of FIG. 1, the original image 120a has been scaled to obtain the upscale image 120c, with upscaled representations 124c, 126c. This corresponds to an model space, where both objects 114a, 116a are now within the range 130 of the original dataset.

For training a network predicting 3D attributes of dynamic objects, accurate 3D position, size, orientation data is required in model space. The principal problem to solve for overcoming the dataset limitations is handling image-visible, non-annotated objects 116a, 116b, 116c within the required operational distance range 134.

The regions 112a, 112b, 112c represent the non-annotated regions, with the non-annotated objects 116a, 116b, 116c. Range 134 represents the required operational domain, in which the developed algorithm has to detect all the objects, while range 130 are the distance limits of the annotated data. The three columns represent the three options during zoom augmentation. First case (left) is the non-augmented, original version. Second (center) case when input image is downscaled, mimicking farther objects in image space, so the corresponding ground truth in the model space should be adjusted consistently. The third case (right), when input image is upscaled, bringing the objects closer to the camera. The figure highlights the inconsistency between applying various zoom levels, as annotated regions on the transformed cases (second, third) overlap with the original non-annotated region.

FIG. 1 presents the inconsistencies of applying vanilla zoom augmentation. The first area 110a, 110b, 110c represents the region where all image-visible objects are annotated, while the second area 112a, 112b, 112c is where our annotation is imperfect and contains false negatives. When applying vanilla zoom augmentation technique to extend the operational domain of the developed algorithm, discrepancies may arise, i.e., when the zoom augmented dataset contains original and down-scaled images (case #1 and #2) on FIG. 1, it can be seen GT (Ground Truth) frames contradict each other. In case #2 it is required to detect objects beyond the original GT limit (upper limit of the region 130), while in case #1 it cannot be utilized in the loss function, since we do not have any information on even the existence of the unlabeled object 116. To overcome the limitations and make zoom augmentation viable in our case, additional information is required to fill missing data, i.e., non-annotated objects at least in image space. Lacking data could be refill with human supervision but this is infeasible since it is not scalable. Pseudo-labeling is a promising solution, however in our case the whole 3D information could not be recovered, but the 2d information is enough to eliminate the blockers and make zoom augmentation viable, so widening the limits of the dataset and extending the operational domain of the developed detection algorithm. A pretrained, state-of-the-art 2D bounding box network can be used to detect all image visible objects. Using this additional information, we can mask the corresponding loss terms and overcome the discrepancies in the dataset.

The main objective of supervised learning is to define a mapping from input space to the output by learning the value of parameters that minimizes the error of the approximation function [9], formally.

$$M(X; \Theta) = Y$$
$$\min_{\theta} L(Y - M(X, \theta)) \quad (1)$$

where $L$ is an arbitrary loss function, Y is the regression target, $X$ the input and M is the model parameterized by $\theta$.

For training a model using supervised learning, a training set is needed:

$$D_{GT} = \left\{ \left( x_1^L, y_1^L \right), ..., \left( x_n^L, y_n^L \right) \right\} \subseteq R^d \times C \quad (2)$$

where:

- $x_i^L \in X^L$ is the input sample where annotations are available,
- $y_i^L \in Y^L$ is the ground truth,
- $R^d$ is the d dimensional input space,
- $C$ is the label space.

The pseudo-labeling method introduces another data set where labels for an unlabeled dataset are generated by the trained M(X; θ) model:

$$D_{PS} = \left\{ \left( x_1^U, y_1^{PS} \right), ..., \left( x_m^U, y_m^{PS} \right) \right\} \subseteq R^d \times C \quad (3)$$

where:

- $x_i^U \in X^U$ is the input sample from unlabeled data,
- $y_i^{PS} \in M\left( X^U; \theta \right)$ is the pseudo-label generated by the trained model.

The final model is trained on the union of the annotated and pseudo-labeled datasets.

The main objective of semi-pseudo-labeling is to utilize pseudo-labels generated by a model $M^S \left( X^{SL}; \theta^S \right)$ trained on a simpler task for training another model $M^C$ ($X^{CL}$; $\theta^C$) performing a more complex task.

Both simple and complex tasks have annotated training sets for their specific tasks:

$$D_{GT}^S = \left\{ \left( x_1^{SL}, y_1^{SL} \right), ..., \left( x_n^{SL}, y_n^{SL} \right) \right\} \subseteq R^d \times C^S \quad (4)$$

$$D_{GT}^C = \left\{ \left( x_1^{CL}, y_1^{CL} \right), ..., \left( x_m^{CL}, y_m^{CL} \right) \right\} \subseteq R^d \times C^C \quad (5)$$

The main differentiator between regular pseudo-labeling and semi-pseudo-labeling method is that the simple model $M^S$ does not generate pseudo-labels on unlabeled data (although it is a viable solution and might be beneficial in some cases). Rather, pseudo-labels are generated using the input data of the complex model $M^C$. In this way, the label space of complex model can be extended, as can be seen in Eq. 6:

$$D_{SPS}^C = \left\{ \left( x_1^{CL}, y_1^{CL} \cup y_1^{SPS} \right), ..., \left( x_m^{CL}, y_m^{CL} \cup y_m^{SPS} \right) \right\} \subseteq R^d \times \left( C^C \cup C^S \right) (6)$$

where:

- $x_i^{CL} \in X^{CL}$ is the i-th input sample where annotations for the complex task are available,
- $y_i^{CL} \in Y^{CL}$ is the i-th ground truth label,
- $y_i^{SPS} \in M^S \left( X^{CL}; \theta^S \right)$ is the i-th semi-pseudo-label generated by the simple model

The final model $M^C$ ($X^{CL}$; $\theta^C$) is trained on the semi-pseudo-labeled $D_{SPS}^C$ dataset.

Regarding the above equations, it should be pointed out that the present method is related to object detection, where the number of output data points is different from the number of input data points (i.e. one image can contain several objects). Equations (2)-(6) state a general form for labels as (x, y) pairs where x is the input image and y is the ground truth label for image x. In practice, this label can be a fixed-size array of objects (where an object is represented with its features). If the number of detectable objects is smaller than the size of the label vector, then in embodiments it can be filled with zeros (indicating non-existent objects). For example, image 1 of FIG. 1 with two objects can be represented as a fixed size array with five elements where the first two elements are the object features and the remaining three elements are empty objects:

*label_for_img1 = [(img1_obj1_x, img1_obj1_y, img1_obj1_z, ...), (img1_obj2_x, img1_obj2_y, img1_obj2_z, ...), (0,0, ...), (0,0, ...), (0,0, ...)]*

Similarly, image 2 with three objects can be represented as follows:

$$label\_for\_img2 = [(img2\_obj1\_x,\ img2\_obj1\_y,\ img2\_obj1\_z,\ ...),\ (img2\_obj2\_x,$$
$$img2\_obj2\_y,\ img2\_obj2\_z,\ ...),\ (img2\_obj3\_x,\ img2\_obj3\_y,\ img2\_obj3\_z,\ ...),\ (0,0,\ ...),$$
$$(0,0,\ ...)]$$

Then, the aggregated labels for the batch of image1 and image2 can be represented as follows:

$$GT = [label\_for\_img1,\ label\_for\_img2]$$

This is only a schematic view for the sake of illustration.

The above equations refer to m elements for the ground truth and the extended dataset, however, in practice, the "extended dataset" usually comprises more labels than the original ground truth. For example, image 1 has a car 20 meters away from the ego car which has a ground truth label, and a car 120 meters away from the ego car which is found by a 2D detector and marked as a semi-pseudo-label. Then, the extended label for this image will be represented as the union of the ground truth (available before pseudo-labeling) and the pseudo-labeled distant object.

The dataset for complex tasks (see equation 5) typically does not include information for all data points, e.g. there are distant cars in the image without ground truth labels.

In the originally available complex ground truth labels, a complex label may comprise all the information that a simple label comprises. For example, we can calculate the 2D bounding boxes of previously existing 3D bounding box annotation. This can be useful during the neural network training because the NN will be able to detect pseudo-labeled (e.g. a distant car) objects only with known 2D features and learn the corresponding 3D characteristics from the data, due to zoom augmentation, even though these 3D properties are not marked explicitly in the label. This phenomenon is possible due to the generalization capability of the neural network.

Insofar as pseudo-labels are generated using the input data of the complex model $M^C$, this describes that the simple model is run on the complex model's dataset and pseudo-labels are generated for input images of the complex model's dataset. In this way, we can obtain a label for the object visualized in FIG. 1 that is not found in the original 3D ground truth.

Considering our use case, ground truth parameters are 2D and 3D attributes of the objects which should be detected. Semi-pseudo-labeled ground truth consists of 2D information only, which could stem from manual annotation or as the output of a pretrained 2D object detection neural network.

As outlined above, the simple model may be a 2D bounding box detector utilized for pseudo-labeling distant objects that are missing from the complex 3D ground truth due to various reasons (e.g. there was not any LiDAR reflection from a distant object). The simple model can be a 2D object detector while the complex model can be a 3D object detector.

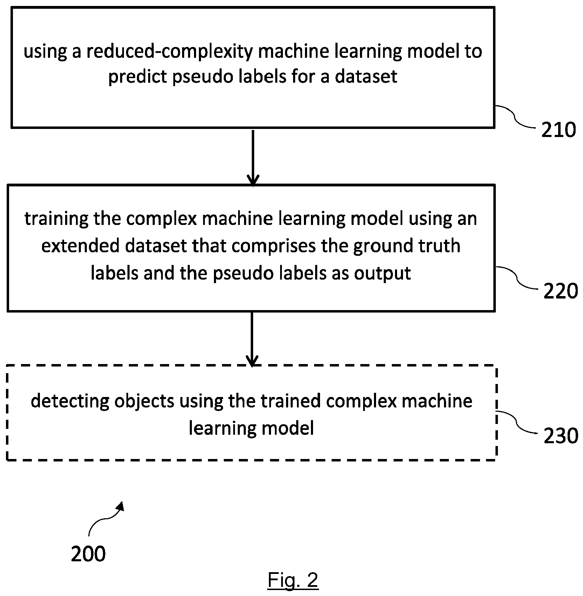

FIG. 2 shows a method for training a complex machine learning model based on a dataset that comprises datapoints and ground truth labels for at least some of the datapoints of the dataset, wherein the datapoints comprise images.

The method comprises a first step 210 of using a reduced-complexity machine learning model to predict pseudo labels for the dataset.

The method comprises a second step 220 of training the complex machine learning model using an extended dataset that comprises the ground truth labels and the pseudo labels as output.

The method may comprise an optional third step 230 of detecting objects using the trained complex machine learning model.

The mentioned three steps 210, 220, 230 may be carried out on different processing units. For example, the first step 210 and the second step 220 may be carried out in different units of a data center. The trained complex machine learning model maybe transferred to a vehicle and the third step 230 may be carried out at least partly on the vehicle.

The semi-pseudo-labeling method of FIG. 2 was developed for training a 3D object detection neural network to perform predictions that are out of training data distribution. The requirement was to extend the detection range of an autonomous driving system to 200 meters while the distance range of annotated data does not exceed 100 meters. In addition, some detectable classes were missing from the training data. However, the method is also applicable to other data and other application scenarios.

A preferred embodiment uses a YOLO [10]-like single-stage object detector convolutional neural network (see the details in Section 3.5) which has utilized our semi-pseudo-labeling method and 3D data augmentations (see below). A regular 2D bounding box detector has been chosen as the simple model $M^S(X^{SL}; \theta^S)$ where the input space $X^{SL}$ contains HD resolution stereo image pairs and label space $C^S$ consists of $(x, y, w, h, o, c_1, ..., c_n)$ tuples, where:

- x is the x coordinate of the bounding box center in image space,

- y is the y coordinate of the bounding box center in image space,
- w is the width of the bounding box in image space,
- h is the height of the bounding box in image space,
- o is the objectness score,
- $c_i$ is the probability that the object belongs to the $i$-th category.

The model has performed 2D object detections on the 3D annotated dataset which in our case is the same as $X^{SL}$, i.e., HD images. The resulting *2D* detections found distant objects which are not annotated by 3D bounding boxes and added as semi-pseudo-labels. Finally, the 3D object detector was trained on the combination of 3D annotated data and semi-pseudo-labeled 2D bounding boxes. The label space of the 3D detector is $(x, y, w, h, o, c_1,..., c_n, P, D, O)$ tuples, where:

- x is the horizontal coordinate of the 2D projection of 3D bounding box center,
- y is the vertical coordinate of the 2D projection of 3D bounding box center,
- *w* is the width of the 2D projection of 3D bounding box,
- h is the height of the 2D projection of 3D bounding box,
- o is the objectness score,
- $c_i$ is the probability that the object belongs to the i-th category,
- P is a 3-dimensional vector of the center point of 3D bounding box in model space (which is reconstructed using auxiliary regressed instance-based disparity and projected center point values, c.f. Section 3.4),
- D is a 3-dimensional vector containing the dimensions (width, height, length) of the 3D bounding box,
- O is a 4-dimensional vector of the orientation of the 3D bounding box represented as a quaternion.

A deduplication step is required to avoid double annotations in the semi-pseudo-labeled dataset which can be executed by examining the ratio of the IoU (intersection over union) of the semi-pseudo-labeled annotations and 2D projection of 3D bounding boxes. If the ratio exceeds a threshold, the pseudo-labeled annotation should be filtered out.
The label space of semi-pseudo-labels is more restricted than the 3D label space *since semi-pseudo-labels (i.e., 2D detections) do not contain 3D characteristics.* To avoid the ambiguous training process, we have created binary masks for semi-pseudo-labels which were utilized to mask out 3D loss terms in the case of semi-pseudo-labels. Due to this solution and the single-stage architecture as well as label space representation, we were able to simultaneously train the neural network to detect objects in 2D and 3D space.
Most 2D data augmentations are easy to generalize to 3D. However, zooming is not trivial since changes in the image scale modifies the position and egocentric orientation of annotations in 3D space too. We have developed a 3D zoom augmentation using a virtual camera. The method consists of two main steps. The first is to either zoom in or zoom out of the image. In this way, we can emulate that an object moves either closer or farther to the camera. The second step is to modify the camera matrix (which describes the mapping of a camera from 3D points in the world to 2D points in an image) to follow the 2D transformation and to keep 3D annotation intact. This can be performed by linear transformations and a virtual camera that adjusts its principal point and focal length considering the original camera matrix and the 2D scaling transformation. Changing camera intrinsic parameters mimics the change of the egocentric orientation of the given object, but its apparent orientation, which is the regressed parameter during the training, remains the same.
Applying random shift of the image enforces the decoupling of image position and object distance. Due to this augmentation, the detection system can prevent sticking to a specific camera intrinsics. Adjusting predicted depth with the focal length of the actual camera or regressing the focal_length / disparity value makes trained network more robust to the change of camera intrinsics.
Preferably, the 3D zoom augmentation can be implemented as follows: First, a scaling factor between a lower and upper bound is randomly drawn. If the lower and upper bound is smaller than one, a zoom-out operation is performed. If the lower and upper bound are greater than 1, a zoom-in operation is performed. If the lower bound is less than one and the upper bound is greater than one, either a zoom-in or zoom-out is performed. The 2D part of zoom works as in the traditional case when one zooms in / out to the image using the above-mentioned scaling factor (in the case of zooming out, the image is padded with zeros for having the original image size). Then, the camera matrix corresponding to the image can be adjusted by scaling the focal length components with the scaling factor. If the 2D image is shifted beside the zoom, the camera matrix can be adjusted by shifting the principal point components. Therefore, the augmentations for a corresponding image and 3D labels are performed in a consistent manner.
The 3D augmentations have the advantageous effect that it is possible to accurately detect objects that are not part of the training distribution (i.e. detect distant objects without ground truth labels), as is mentioned above. It is true that semi-pseudo-labelling alone can be enough for the detections, however, the 3D properties, especially depth estimation would be subopti-mal due to the fact that neural networks cannot extrapolate properly outside of the training distribution.

To prove the applicability of the proposed semi-pseudo-labeling method and 3D data augmentations, we have designed and implemented a convolutional neural network for stereo 3D object detection. The application area of the neural network is autonomous driving; therefore, detectable objects are vehicles, two-wheelers, pedestrians, traffic signs, and traffic lights. The input and output of the detection network have been described above.

aiMotive has developed a data collection and automatic annotation method which produces training data for a 3D object detection network. The data collection system utilizes LiDARs for scanning the environment in 3D and automatic annotation algorithms for generating the ground truth training data. One of the limitations of this system is the perception range of the LiDAR which resulted in detected objects closer than 100 meters while our requirement is to reach 200 meters as the detection range. The semi-pseudo-labeling method and 3D data augmentations are a solution to this problem.

Since real-time performance is essential for autonomous driving, we have designed a single-stage detection architecture like YOLOv$_3$ [10]. As the first step, left and right images of a stereo image pair can be fed to a proprietary neural network. The left and right branch of the network uses shared backbone weights. When the left-right image pair is processed by the backbone, the resulting embeddings are fused (we used concatenation as the fusion method) before passed to a Feature Pyramid Network [11].

The 3D label space representation as described above is used within the network to predict the 2D and 3D characteristics of detected objects. The ground truth was extended with a bool flag that indicates whether the annotated object is semi-pseudo-label or not. This value was used in the loss function to mask out 3D loss terms in case of semi-pseudo-labels to not penalize the weights corresponding to 3D properties during backpropagation when no ground truth is known.

We have trained the network using multi-task learning [19], 2D and 3D detection is learned in a parallel manner. For this purpose, we have utilized additional constraints to facilitate training. Besides the 2D (x, *y, w, h)* and 3D (position, orientation, dimension) properties, we used the following loss terms:

- 2D projection of 3D cuboid,
- Instance-based disparity,
- Instance-based width difference.

Instead of directly learning the 3D center point of the cuboid, we designed the network to predict the 2D projection of the 3D cuboid. The center point of the 3D bounding box can later be reconstructed from the depth and its 2D projection. The network can be trained using depth directly. However, we have replaced it with the disparity which can be calculated from the formula that considers the camera baseline, the focal length, and the depth (disparity = focal_length * base_distance / depth). This representation resulted in a smoother loss landscape which speeded up convergence. Instance-based disparity and width difference are two auxiliary loss terms which compute the disparity between the center point of 2D projected 3D bounding box on the left and right images and the difference between the width of the 2D projection of 3D bounding boxes on the left and right images, respectively. Note that the two instance-based *loss* terms are not used during inference, their only purpose is to facilitate the training. To the best of our knowledge, this formulation cannot be found in literature. Finally, the dimension prediction part of the network uses priors (i.e., precomputed category averages) and only deltas are predicted instead of directly regressing the dimensions.

As mentioned before, we have framed the training of the network as a multitask-learning problem. Our loss function consists of two parts, 2D and 3D loss terms. The loss function for 2D properties is adapted from YOLO paper. For the 3D loss term, we have innovatively combined several machine learning techniques besides our instance-based disparity and width difference loss. The first technique used is lifting the loss to 3D instead of calculating the loss for certain individual loss terms (e.g., 2D projection of cuboid center point, orientation, etc.). The 3D loss is calculated by reconstructing the bounding cuboid in 3D and then calculating the L2 loss of predicted and ground truth corner points of the cuboid. Another trick is to disentangle loss terms as proposed by [12]. As mentioned before, we utilized a masking solution to avoid penalizing the network when predicting 3D properties to semi-pseudo-labels that do not have 3D annotations. The final loss is the sum of 2D and 3D loss.

We have trained the network with the automatically annotated 3D and semi-pseudo-labeled dataset. As an additional dataset expansion, we have added a manually annotated 2D bounding box dataset to the training set as another semi-pseudo-labeled dataset.

There are several other existing solutions to the 3D detection problem. However, these methods mostly require a slower two-stage detector architecture [13], [14], [15], [16], another sensor modality [17], or have significantly shorter detection range [13].

The 3D object detection neural network described above fits the criteria for autonomous driving: it operates in real-time and significantly extends the detection range. The inference time on a Titan XP GPU is ~18 milliseconds (~55 FPS). This running time can further be reduced by approximately a factor of 2 by using quantization and storing the weights as integers instead of 32-bit floating points. Due to semi-pseudo-labeling and 3D data augmentations, the neural network is able to detect objects up to 200 meters even though the training dataset did not contain objects further than 130 meters.

Since we have formulated the depth prediction taking into account the focal length and the baseline, our solution is a general method that works with arbitrary camera and stereo rig setup. Another benefit is that the network requires images only in inference mode, which prevents the usage of expensive lidars and reduces sensing complexity.

One typical use case of the proposed solution and the designed neural network is SAE Level 2+ highway autopilot software. The detector can be an integral part of the perception system which has to be able to recognize static and dynamic objects in the distance in order to provide useful information to the upper layers.

The semi-pseudo-labeling training method can be integrated into other object detectors or can be used for other application areas. In our case, a stereo 3D object detector has been developed but it is easy to design a mono 3D detector that follows the idea of the proposed method.

A 3D object detector trained with the presented method can be utilized in highways or urban environments. Due to its design, the network can be used with different cameras and stereo rig setups.

One exploitation area is cost-reduction during the annotation process. Less expensive LiDARs can be used as part of the recording setup and the perception range can be extended by semi-pseudo-labeling. The cost of human annotation can be reduced too by using 3D boxes generated the presented network as pseudo-labels and refined by manual annotators.

## References

[1] Pseudo-Label: The Simple and Efficient Semi-Supervised Learning Method for Deep Neural Networks - https://scholar.google.com/scholar?oi=bibs&cluster=16547318329102522555&btnl=1&hl=ja

[2] Chen, Nicholas FY. "Pseudo-labels for supervised learning on dynamic vision sensor data, applied to object detection under ego-motion." Proceedings of the IEEE conference on computer vision and pattern recognition workshops. 2018.

[3] https://patents.google.com/patent/US20200394458A1/en?oq=US20200394458A1

[4] https://patents.google.com/patent/US20200082210A1/en?oq=US20200082210A1

[5] Stevo. Bozinovski and Ante Fulgosi (1976). "The influence of pattern similarity and transfer learning upon training of a base perceptron B2." (original in Croatian) Proceedings of Symposium Informatica 3-121-5

[6] Stevo Bozinovski (2020) "Reminder of the first paper on transfer learning in neural networks, 1976". Informatica 44: 291-302.

[7] Shorten, C., & Khoshgoftaar, T. M. (2019). A survey on image data augmentation for deep learning. Journal of Big Data, 6(1), 1-48.

[8] Xu, J., Li, M., & Zhu, Z. (2020, October). Automatic data augmentation for 3d medical image segmentation. In International Conference on Medical Image Compu-ting and Computer-Assisted Intervention (pp. 378-387). Springer, Cham.

[9] Ian Goodfellow, Yoshua Bengio and Aaron Courville (2016): "Deep Learning ". MIT Press.

[10] Redmon, J., & Farhadi, A. (2018). Yolov3: An incremental improvement. arXiv preprint arXiv: 1804.02767.

[11] Lin, T. Y., Dollar, P., Girshick, R., He, K., Hariharan, B., & Belongie, S. (2017). Feature pyramid networks for object detection. In Proceedings of the IEEE confer-ence on computer vision and pattern recognition (pp. 2117-2125).

[12] Simonelli, A., Bulo, S. R., Porzi, L., Lopez-Antequera, M., & Kontschieder, P. (2019). Disentangling monocular 3d object detection. In Proceedings of the IEEE/CVF International Conference on Computer Vision (pp. 1991-1999).

[13] Qian, R., Garg, D., Wang, Y., You, Y., Belongie, S., Hariharan, B., ... & Chao, W. L. (2020). End-to-end pseudo-lidar for image-based 3d object detection. In Proceedings of the IEEE/CVF Conference on Computer Vision and Pattern Recognition (pp. 5881-5890).

[14] Qin, Z., Wang, J., & Lu, Y. (2019). Triangulation learning network: from monocular to stereo 3d object detection. In Proceedings of the IEEE/CVF Conference on Computer Vision and Pattern Recognition (pp. 7615-7623).

[15] Li, P., Chen, X., & Shen, S. (2019). Stereo r-cnn based 3d object detection for autonomous driving. In Proceedings of the IEEE/CVF Conference on Computer Vision and Pattern Recognition (pp. 7644-7652).

[16] TuSimple patent: https://patents.google.com/patent/US10839234B2/en?oq=US10839234B2

[17] https://patents.google.com/patent/US20190188541A1/en?oq=US20190188541A1

[18] Liu, Z., Wu, Z., & Toth, R. (2020). Smoke: single-stage monocular 3d object detection via keypoint estimation. In Proceedings of the IEEE/CVF Conference on Computer Vision and Pattern Recognition Workshops (pp. 996-997).

[19] Simonelli, A., Bulo, S. R., Porzi, L., Ricci, E., & Kontschieder, P. (2019). Towards Generalization Across Depth for Monocular 3D Object Detection. arXiv pre-print arXiv: 1912.08035.

[19] Caruana, R. (1997). Multitask learning. Machine learning, 28(1), 41-75.

**Claims**

1. A method for training a complex machine learning model based on a dataset that comprises datapoints and ground truth labels for at least some of the datapoints of the dataset, wherein the datapoints comprise images, the method comprising:

    - using (210) a reduced-complexity machine learning model to predict pseudo labels for the dataset, and
    - training (220) the complex machine learning model using an extended dataset that comprises the ground truth labels and the pseudo labels as output.

2. The method of claim 1, wherein

    - a ground truth label comprises a coordinate, a dimension, and/or an orientation of a 3D bounding box,
    - a pseudo label comprises a coordinate, a dimension and/or an orientation of a 2D bounding box, and/or
    - a ground truth label and/or a pseudo label comprises an objectness score and/or probabilities for a set of object categories.

3. The method of one of the previous claims, wherein the ground truth labels are labels of objects within an annotated area (110a, 110b, 110c) of the dataset and wherein the dataset comprises unlabelled datapoints for objects that are outside the annotated area of the dataset, wherein preferably the annotated area corresponds to a near-field (130) of a camera and a non-annotated area (112a, 112b, 112c) corresponds to a far-field (132) of the camera.

4. The method of one of the previous claims, further comprising:

    - obtaining 3D data, and
    - extending the dataset with virtual images based on a virtual camera virtually capturing the 3D data,

    wherein the obtaining the images comprises moving a position of the virtual camera to obtain shifted and/or zoomed images from a moved camera position.

5. The method of claim 4, wherein the obtaining images from the moved camera position comprises adjusting a camera matrix that describes a mapping of positions in the 3D data to a 2D image, wherein preferably adjusting the camera matrix comprises adjusting the principal point and the focal length based on an original camera matrix and a 2D scaling.

6. The method of one of the previous claims, further comprising

    - an initial step of detecting, based on the images, objects for which pseudo labels need to be predicted, and/or
    - performing deduplication to remove pseudo labels for which the dataset already comprises ground truth labels.

7. The method of claim 6, wherein the step of performing deduplication comprises:

    - determining a ratio of an intersection over union of a 2D bounding box of a pseudo label and a 2D projection of a 3D bounding box of a ground truth label, and
    - if the ratio is larger than a predetermined threshold, removing the pseudo label from the extended dataset.

8. The method of one of the previous claims, wherein the training the complex machine learning model comprises using a loss function that does not penalize errors contributions that correspond to 3D properties where no ground truth label is available, wherein preferably a Boolean flag is used to indicate in the extended dataset whether a label is a ground truth label or a predicted pseudo label.

9. The method of one of the previous claims, further comprising using the complex machine learning model for detecting objects in autonomous driving, wherein the labels comprise object classes that preferably comprise one or more of vehicles, two-wheelers, pedestrians, traffic signs, and traffic lights.

10. The method of one of the previous claims, wherein the complex machine learning model is used to predict a center point of a 3D cuboid based on a prediction of the 2D projection of the 3D cuboid and a predicted depth.

11. The method of claim 10, wherein the depth is predicted based on a disparity that is calculated based on a camera baseline, a focal length and a depth and/or a predicted depth is adjusted based on a focal length of a current camera.

12. The method of one of the previous claims, wherein the complex machine learning model is a multi task machine learning model that is configured to solve a first task and a second task in parallel, and wherein the reduced-complexity machine learning model is configured to solve the first task, wherein preferably the first task comprises a prediction of a 2D bounding box and the second task comprises a prediction of a 3D bounding box.

13. The method of one of the previous claims, wherein training of the complex machine learning model comprises using a loss terms that comprises one or more of:

   - a projection loss term that is based on a 3D projection of 3D cuboid,
   - a disparity loss term that is based on a disparity between a centre point of a 2D projected 3D bounding box on left and right stereo images, and
   - a width loss term that is based on a difference between a width of a 2D projection of 3D bounding boxes on left and right stereo images.

14. An apparatus, configured to carry out the method of one of the previous claims.

15. A computer-readable storage medium storing program code, the program code comprising instructions that when executed by a processor carry out the method of any one of claims 1 to 13.

Fig. 1

using a reduced-complexity machine learning model to
predict pseudo labels for a dataset

210

training the complex machine learning model using an
extended dataset that comprises the ground truth
labels and the pseudo labels as output

220

detecting objects using the trained complex machine
learning model

230

200

<u>Fig. 2</u>

Europäisches
Patentamt

European
Patent Office

Office européen
des brevets

# EUROPEAN SEARCH REPORT

Application Number

EP 22 15 4927

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2021 106999 A1 (KRONES AG [DE]) 28 October 2021 (2021-10-28) * paragraphs [0007] - [0011], [0024]; claim 1 * | 1-15 | INV. G06K9/62 |

-----

TECHNICAL FIELDS
SEARCHED (IPC)

G06V
G06K
G06T

The present search report has been drawn up for all claims

| Place of search | Date of completion of the search | Examiner |
|---|---|---|
| The Hague | 14 July 2022 | Mukasa, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 15 4927

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2022

| Patent document cited in search report | Publication date | Patent family member(s) | Publication date |
|---|---|---|---|
| DE 102021106999 A1 | 28-10-2021 | DE 102021106999 A1 | 28-10-2021 |
|  |  | WO 2021213779 A1 | 28-10-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200394458 A1
- US 20200082210 A1
- US 10839234 B2
- US 20190188541 A1

**Non-patent literature cited in the description**

- **CHEN, NICHOLAS FY.** Pseudo-labels for supervised learning on dynamic vision sensor data, applied to object detection under ego-motion. *Proceedings of the IEEE conference on computer vision and pattern recognition workshops,* 2018
- **STEVO. BOZINOVSKI ; ANTE FULGOSI.** The influence of pattern similarity and transfer learning upon training of a base perceptron B2. *Proceedings of Symposium Informatica 3-121-5,* 1976
- **STEVO BOZINOVSKI.** Reminder of the first paper on transfer learning in neural networks. *Informatica,* 1976, vol. 44, 291-302
- **SHORTEN, C. ; KHOSHGOFTAAR, T. M.** A survey on image data augmentation for deep learning. *Journal of Big Data,* 2019, vol. 6 (1), 1-48
- Automatic data augmentation for 3d medical image segmentation. **XU, J. ; LI, M. ; ZHU, Z.** In International Conference on Medical Image Compu-ting and Computer-Assisted Intervention. Springer, October 2020, 378-387
- **IAN GOODFELLOW ; YOSHUA BENGIO ; AARON COURVILLE.** Deep Learning. MIT Press, 2016
- **REDMON, J. ; FARHADI, A.** Yolov3: An incremental improvement. *arXiv,* 2018, vol. 1804, 02767
- **LIN, T. Y. ; DOLLAR, P. ; GIRSHICK, R. ; HE, K. ; HARIHARAN, B. ; BELONGIE, S.** Feature pyramid networks for object detection. *In Proceedings of the IEEE confer-ence on computer vision and pattern recognition,* 2017, 2117-2125

- **SIMONELLI, A. ; BULO, S. R. ; PORZI, L. ; LOPEZ-ANTEQUERA, M. ; KONTSCHIEDER, P.** Disentangling monocular 3d object detection. *Proceedings of the IEEE/CVF International Conference on Computer Vision,* 2019, 1991-1999
- **QIAN, R. ; GARG, D. ; WANG, Y. ; YOU, Y. ; BELONGIE, S. ; HARIHARAN, B. ; CHAO, W. L.** End-to-end pseudo-lidar for image-based 3d object detection. *Proceedings of the IEEE/CVF Conference on Computer Vision and Pattern Recognition,* 2020, 5881-5890
- **QIN, Z. ; WANG, J. ; LU, Y.** Triangulation learning network: from monocular to stereo 3d object detection. *Proceedings of the IEEE/CVF Conference on Computer Vision and Pattern Recognition,* 2019, 7615-7623
- **LI, P. ; CHEN, X. ; SHEN, S.** Stereo r-cnn based 3d object detection for autonomous driving. *Proceedings of the IEEE/CVF Conference on Computer Vision and Pattern Recognition,* 2019, 7644-7652
- **LIU, Z. ; WU, Z. ; TOTH, R.** Smoke: single-stage monocular 3d object detection via keypoint estimation. *Proceedings of the IEEE/CVF Conference on Computer Vision and Pattern Recognition Workshops,* 2020, 996-997
- **SIMONELLI, A. ; BULO, S. R. ; PORZI, L. ; RICCI, E. ; KONTSCHIEDER, P.** Towards Generalization Across Depth for Monocular 3D Object Detection. *arXiv,* 2019, vol. 1912, 08035
- **CARUANA, R.** Machine learning. *Multitask learning,* 1997, vol. 28 (1), 41-75